# EUROPEAN PATENT SPECIFICATION

(11) **EP 0 936 243 B1**
(45) Date of publication and mention of the grant of the patent: **18.04.2007**
(21) Application number: 99300797.0
(22) Date of filing: 03.02.1999
(51) Int. Cl.: C08K 5/49, C08K 5/523, C08K 5/52, C08L 69/00, C08K 13/02

(54) **Flame retardant carbonate polymer composition**
Flammhemmende Polycarbonatzusammensetzung
Composition de polycarbonate ignifugée

(30) Priority: 13.02.1998 US 23929
(43) Date of publication of application: 18.08.1999
(73) Proprietor: GENERAL ELECTRIC COMPANY, Schenectady, NY 12345 (US)
(72) Inventor: Campbell, John Robert, Clifton Park, New York 12065 (US); Rodgers, Patrick A., Selkirk, New York 12158 (US); Wroczynski, Ronald James, Schenectady, New York 12303 (US); Barren, James Paul, Scotia, New York 12302 (US)
(74) Representative: Szary, Anne Catherine

(56) References cited:
- WO-A-96/27637
- US-A- 5 521 230
- US-A- 5 663 280

## Description

This invention relates to a flame retardant polymer composition having improved hydrolytic stability.

The use of organophosphorus flame retardants for imparting fire-retarding properties to thermoplastic resins is known. For example, U.S. Patent No. 5,204,394 discloses thermoplastic resin compositions that contain an aromatic polycarbonate resin, a styrene-containing graft copolymer and an oligomeric organophosphorus flame retardant.

A thermoplastic resin composition that exhibits good flame retardant properties and that maintains an overall balance of physical properties under hydrolytic conditions is desired.

In a first embodiment, the present invention is directed to a thermoplastic resin composition, comprising
(a) 75 to 98 parts by weight of a thermoplastic resin comprising at least one aromatic carbonate resin, and
(b) 2 to 25 parts by weight of an organophosphorus flame retardant compound,
each based on 100 parts by weight of the combined amount of thermoplastic resin and organophosphorus compound, wherein the organophosphorus compound (1) has an acid content that is neutralizable by titration addition of from zero to the equivalent of 1.0 mg of potassium hydroxide per gram of organophosphorus compound, (2) has a hydrolysable chloride content of zero to 100 parts per million based on the weight of the organophosphorus compound as measured by conventional gas or liquid chromatographic techniques and (3) has a magnesium content of from zero to 1000 parts per million based on the weight of the weight of the organophosphorus content.

In a second embodiment, the present invention is directed to a process for making a flame retardant themoplastic resin composition, comprising combining a thermoplastic resin, said resin comprising at least on aromatic polycarbonate resin, and a flame-retarding amount of a organophosphorus flame retardant compound as described above.

As used herein, the terminology "hydrolytic conditions" means conditions that favor hydrolysis of any acids and any acid generating impurities present and the terminology "equivalent " means chemically equivalent in the sense of being neutralized by the same number of molar equivalents of KOH. Hydrolytic conditions include those wherein the composition of the present invention is exposed to moisture, typically, in the form of ambient elevated humidity, such as for example, a relative humidity of greater than 50%. Hydrolytic conditions become more severe with increasing temperature and humidity and the hydrolytic stability of the composition of the present invention may be predicted on the basis of accelerated aging tests conducted at elevated heat and humidity, such as, for example, 100°C and 100% relative humidity.

The composition of the present invention exhibits improved hydrolytic stability. As used herein, the terminology "hydrolytic stability" means a tendency of the composition not to undergo a change in molecular weight of the thermoplastic resin components of the composition, particularly the polycarbonate resin, when the resin composition is exposed to hydrolytic conditions.

### DETAILED DESCRIPTION OF THE INVENTION

The composition of the present invention comprises from 75 to 98 parts by weight ("pbw"), more preferably from 80 to 95 pbw and even more preferably from 85 to 92 pbw, of the thermoplastic resin, from 2 to 25 pbw, more preferably from 5 to 20 pbw and even more preferably from 8 to 15 pbw, of the organophosphorus compound, each based on 100 pbw of the combined amount of thermoplastic resin and organophosphorus compound.

Suitable aromatic carbonate resins include aromatic polycarbonate resins and aromatic copolyester-carbonate resins.

Aromatic polycarbonate resins are known compounds and the properties and methods of making polycarbonate resins are also known. Typically these are prepared by reacting a dihydric phenol with a carbonate precursor, such as phosgene, a haloformate or a carbonate ester and generally in the presence of an acid acceptor and a molecular weight regulator. Generally speaking, such carbonate polymers may be typified as possessing recurring structural units of the formula (I): 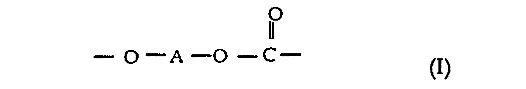 wherein A is a divalent aromatic radical of the dihydric phenol employed in the polymer reaction. The dihydric phenol which may be employed to provide such aromatic carbonate polymers are mononuclear or polynuclear aromatic compounds, containing as functional groups two hydroxy radicals, each of which maybe attached directly to a carbon atom of an aromatic nucleus. Typical dihydric phenols are: 2,2-bis(4-hydroxyphenyl) propane; hydroquinone; resorcinol; 2,2-bis(4-hydroxyphenyl) pentane; 2,4'-(dihydroxydiphenyl) methane; bis(2-hydroxyphenyl) methane; bis(4-hydroxyphenyl) methane;1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2'-dihydroxydiphenyl; 2,6-dihydroxynaphthalene; bis(4-hydroxydiphenyl)sulfone; bis(3,5-diethyl-4-hydroxyphenyl)sulfone; 2,2-bis(3,5-dibromo-4-hydroxyphenyl)propane; 2,2-bis(3,5-dimethy-4-hydroxyphenyl)propane; 2,4'-dihydroxydiphenyl sulfone; 5'-chloro-2,4'-dihydroxydiphenyl sulfone; 4,4'-dihydroxydiphenyl ether; 4,4'-dihydroxy-3,3'-dichlorodiphenyl ether, spiro biindane bis phenol, and the like.

These aromatic polycarbonates can be manufactured by known processes, such as, for example and as mentioned above, by reacting a dihydric phenol with a carbonate precursor, such as phosgene, in accordance with methods set forth in the literature including the melt polymerization process. Generally in the melt polymerization process, a diphenyl carbonate is reacted with a bisphenol.

The carbonate precursor employed in preparing the polycarbonate of this invention can be either carbonyl halide or a haloformate. The carbonyl halides which can be employed herein are, for example carbonyl bromide, carbonyl chloride, etc.; or mixtures thereof. The haloformates suitable for use herein include bishaloformates of dihydric phenols (bischloroformates of bis phenol A, hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene is preferred.

The reaction disclosed above is preferably known as an interfacial reaction between the dihydric compound and a carbonyl chloride such as phosgene. Another process for preparing the aromatic polycarbonate employed in this invention is the transesterification process which involves the transesterification of an aromatic dihydroxv compound and a diester carbonate. This process is known as the melt polymerization process. In the practice of this invention, the process of producing the aromatic polycarbonate is not critical. As used herein, aromatic carbonate polymer shall mean and include any of the aromatic polycarbonates, blends thereof with other polymer, copolymers thereof, copolyester carbonates, and mixtures thereof.

It is also possible to employ two or more different dihydric phenols or a copolymer of a dihydric phenol with a glycol or with a hydroxy- or acid-terminated polyester or with a dibasic acid or hydroxy acid in the event a carbonate copolymer or interpolymer rather than a homopolymer is desired for use in the preparation of the polycarbonate mixtures of the invention. Polyarylates and polyester-carbonate resins or their blends can also be employed. Branched polycarbonates are also useful and are well disclosed in the literature. Also, blends of linear polycarbonate and a branched polycarbonate can be utilized herein. Moreover, blends of any of the above materials may be employed in the practice of this invention to provide the aromatic polycarbonate component of the carbonate polymer composition.

In any event, the preferred aromatic polycarbonate for use in the practice in the present invention is a homopolymer, for example, a homopolymer derived from 2,2-bis(4-hydroxyphenyl)propane (bisphenol-A) and phosgene, commercially available.

The aromatic carbonate polymers also suitable for use in this invention include polyester-carbonates, also known as copolyester-polycarbonates, that is, resins which contain, in addition to recurring polycarbonate chain units of the formula (II): 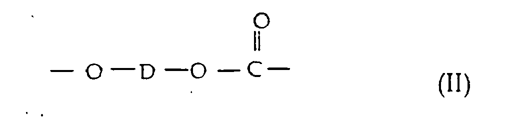 wherein D is a divalent aromatic radical of the dihydric phenol employed in the polymerization reaction, repeating or recurring carboxylate units, for example of the formula (III): 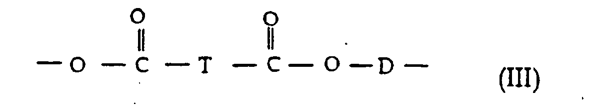 wherein D is a defined above and T is an aromatic radical such as phenylene, naphthylene, biphenylene, substituted phenylene and the like; a divalent aliphatic-aromatic hydrocarbon radical such as an alkaryl or alkaryl radical; or two or more aromatic groups connected through such aromatic linkages which are known in the art.

The copolyester-polycarbonate resins are also prepared by interfacial polymerization technique, well known to those skilled in the art (see for example U.S. Patent 3,169,121 and 4,487,896).

In general, any dicarboxylic acid conventionally used in the preparation of linear polyesters may be utilized in the preparation of the copolyester carbonate resins of the instant invention. Generally, the dicarboxylic acids which may be utilized include the aliphatic dicarboxylic acids, the aromatic dicarboxylic acids, and the aliphatic-aromatic dicarboxylic acids. These acids are well known and are disclosed for example in U.S. Patent 3,169,121.

Mixtures of dicarboxylic acids may be employed. Therefore, where the term dicarboxylic acid is used herein it is to be understood that this term includes mixtures of two or more dicarboxylic acids.

Most preferred as aromatic dicarboxylic acids are isophthalic acid, terephthalic acids, and mixtures thereof. A particularly useful difunctional carboxylic acid comprises a mixture of isophthalic acid and terephthalic acid wherein the weight ratio of terephthalic acid to isophthalic acid is in the range of from 10:1 to 0.2:9:8.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyl dichloride, terephthaloyl dichloride, and mixtures thereof.

The aromatic polycarbonate resins may be linear or branched and, generally, will have a weight average molecular weight of from 10,000 to 200,000 grams per mole ("g/mol"), preferably from 20,000 to 100,000 g/mol, as measured by gel permeation chromatography. Such resins typically exhibit an intrinsic viscosity, as determined in chloroform at 25°C of from 0.3 to 1.5 deciliters per gram (dl/gm), preferably from 0.45 to 1.0 dl/gm.

The branched polycarbonates may be prepared by adding a branching agent during polymerization. These branching agents are well known and may comprise polyfunctional organic compounds containing at least three functional groups which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene),tris-phenol PA (4(4(1,1-bis(p-hydroxyphenyl)-ethyl)alpha, alpha-dimethyl benzyl)phenol), 4-chloroformyl phthalic anhydride, trimesic acid and benzophenone tetracarboxylic acid. The branching agent may be added at a level of 0.05-2.0 weight percent.

All types of polycarbonates end groups are contemplated as being within the scope of the present invention with respect to the polycarbonate component of a carbonate polymer composition.

The thermoplastic resin component of the composition of the present invention may, optionally, further comprise one or more other thermoplastic resins in addition to the aromatic carbonate resin, such as, for example, polyphenylene ether resins, vinyl aromatic graft copolymers resins, styrenic resins, polyester resins, polyamide resins, polyesteramide resins, polysulfone resins, polyimide resins, polyetherimide resins.

In a preferred embodiment, the composition of the present invention comprises an aromatic polycarbonate resin and a vinyl aromatic graft copolymer.

In a preferred embodiment, the thermoplastic resin component of the composition of the present invention comprises, based on 100 pbw of the thermoplastic resin component, from 30 to 99 pbw, more preferably from 50 to 95 pbw, still more preferably from 60 to 90 pbw of an aromatic polycarbonate resin and from 1 to 70 pbw, more preferably from 50 to 95 pbw, still more preferably from 10 to 40 pbw of a vinyl aromatic graft copolymer.

Suitable vinyl aromatic graft copolymers comprise (i) a rubber modified monovinylidene aromatic graft copolymer component and (ii) an ungrafted rigid copolymer component, and are generally prepared by graft polymerization of a mixture of a monovinylidene aromatic monomer and one or more comonomers in the presence of one or more rubbery polymeric substrates. Depending on the amount of rubber present, a separate matrix or continuous rigid phase of ungrafted rigid (co)polymer may be simultaneously obtained along with the rubber modified monovinylidene aromatic graft polymer. The resins may also be produced by blending a rigid monovinylidene aromatic copolymer with one or more rubber modified monovinylidene aromatic graft copolymers. Typically, the rubber modified resins comprise the rubber modified graft copolymer at a level of from 5 to 100 percent by weight ("wt%") based on the total weight of the resin, preferably from 10 to 90 wt% thereof, and more preferably 30 to 80 wt% thereof. The rubber modified resin comprises the ungrafted rigid polymer at a level of from 95 to 0 wt% based on the total weight of the resin, preferably from 90 to 10 wt% thereof, and more preferably from 70 to 20 wt% thereof.

Monovinylidene aromatic monomers which may be employed include styrene, α-methyl styrene, halostyrenes, that is, dibromostyrene, mono or di alkyl, alkoxy or hydroxy substitute groups on the nuclear ring of the monovinylidene aromatic monomer, that is, vinyl toluene, vinylxylene, butylstyrene, parahydroxystyrene or methoxystyrene or mixtures thereof. The monovinylidene aromatic monomers utilized are generically described by the following formula (IV): 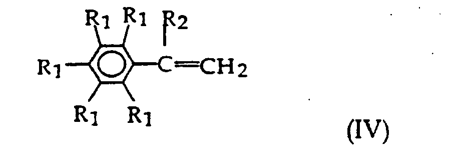 wherein each R₁ is independently H, (C₁-C₆)alkyl, cycloalkyl, aryl, alkaryl, aralkyl, alkoxy, aryloxy, or halo, such as, for example, such as bromine and chlorine, and R₂ is selected from the group consisting of H, (C₁-C₆)alkyl and halo. As used herein, the notation "(Cₓ-C_{y})" in reference to an organic moiety means that the organic moiety contains from x carbons to y carbons. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

Comonomers which may be used with the monovinylidene aromatic monomer includes acrylonitrile, methacrylonitrile, (C₁-C₈)alkyl or aryl substituted acrylate, (C₁-C₈)alkyl, aryl or haloaryl substituted methacrylate, acrylic acid, methacrylic acid, itaconic acid, acrylamide, N-substituted acrylamide or methacrvlamide, maleic anhydride, maleimide, N-alkyl, aryl or haloaryl substituted maleimide, glycidyl (meth)acrylates, hydroxy alkyl (meth)acrylates or mixtures thereof. The acrylonitrile, substituted acrylonitrile, or acrylic acid esters are described generically by the following formula (V): 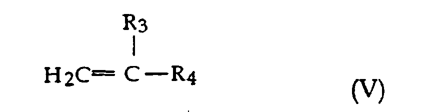 wherein R₃ is H or C₁-C₆)alkyl and R₄ is selected from the group consisting of cyano and (C₁-C₁₆)alkoxycarbonyl. Examples of such monomers include acrylonitrile, ethacrylonitrile, methacrylonitrile, α-chloroacrylonitrile, α-bromoacrylonitrile, methyl acrylate, methyl methacrylate, ethyl acrylate, butyl acrylate, propyl acrylate, isopropyl acrylate and mixtures thereof. The preferred monomer is acrylonitrile and the preferred acrylic acid esters are ethyl acrylate and methyl methacrylate. It is also preferred that the acrylic acid esters, when included, are employed in combination with styrene or acrylonitrile.

The rubber modified graft copolymer preferably comprises (i) the rubber substrate, and (ii) a rigid polymeric superstrate portion grafted to the rubber substrate. The rubber substrate is preferably present in the graft copolymer at a level of from 5 to 80 wt% based on the total weight of the graft copolymer, more preferably from 10 to 70 wt% thereof. The rigid superstrate is preferably present at a level of from 95 to 20 wt% based on the total weight of the graft copolymer, and more preferably from 90 to 30 wt% thereof.

Examples of rubbery polymers for the substrate include: conjugated dienes, copolymers of a diene with styrene, acrylonitrile, methacrylonitrile or (C₁-C₈)alkyl acrylate which contain at least 50% (preferably at least 65% by weight) conjugated dienes, polyisoprene or mixtures thereof; olefin rubbers, that is, ethylene propylene copolymers (EPR) or ethylene propylene non-conjugated diene copolymers (EPDM); silicone rubbers; or (C₁-C₈)alkyl acrylate homopolymers or copolymers with butadiene and/or styrene. The acrylic polymer may also contain up to 5%, of one or more polyfunctional crosslinking agents such as alkylenediol di(meth)acrylates, alkylenetriol tri (meth) acrylates, polyester di(meth)acrylates, divinylbenzene, trivinylbenzene, butadiene, isoprene and optionally graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of (C₁-C₆)alkylacrylate which are produced by aqueous radical emulsion polymerization. The acrylate rubbers may be cross-linked, particulate emulsion copolymers substantially of (C₁-C₈)alkylacrylate, in particular (C₁-C₆)alkylacrylate, optionally in admixture with up to 15% by weight of comonomers such as styrene, methylmethacrylate, butadiene, vinyl methyl ether or acrylonitrile and optionally up to 5% by weight of a polyfunctional crosslinking comonomer, for example, divinylbenzene, glycolbis-acrylates, bisacrylamides, phosphoric acid triallylester, citric acid triallyl-ester, allylesters or acrylic acid or methacrylic acid, triallylcyanurate, triallylisocyanurate. Also suitable are mixtures of diene- and alkylacrylate rubbers and rubbers which have a so-called core/shell structure, for example, a core of diene rubber and a shell of acrylate or vice versa.

Specific conjugated diene monomers normally utilized in preparing the rubber substrate of the graft polymer are generically described by the following formula (VI): 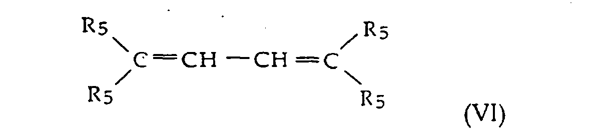 wherein each R₅ is independently H, (C₁-C₆)alkyl, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene, butadiene-acrylonitrile, or the like. The rubbery polymeric substrate portion must exhibit a glass transition temperature (Tg) of less than 0°C.

Mixtures of one or more rubbery polymers previously described for preparing the monovinylidene aromatic graft polymers, or mixtures of one or more rubber modified monovinylidene aromatic graft polymers disclosed herein may also be employed. Furthermore, the rubber may comprise either a block or random copolymer. The rubber particle size used in this invention as measured by simple light transmission methods or capillary hydrodynamic chromatography (CHDF) may be described as having an average particle size by weight of 0.05 to 1.2 microns, preferably 0.2 to 0.8 microns, for emulsion based polymerized rubber latices or 0.5 to 10 microns, preferably 0.6 to 1.5 microns, for mass polymerized rubber substrates which also have included grafted monomer occulsions. The rubber substrate is preferably a particulate, moderately cross-linked diene or alkyl acrylate rubber, and preferably has a gel content greater than 70%.

Preferred graft superstrates include copolymers of styrene and acrylonitrile, copolymers of α-methylstyrene and acrylonitrile and methylmethacrylate polymers or copolymers with up to 50% by weight of (C₁-C₆)alkylacrylates, acrylonitrile or styrene. Specific examples of monovinylidene aromatic graft copolymers include but are not limited to the following: acrylonitrile-butadiene-styrene (ABS), acrylonitrile-styrene-butyl acrylate (ASA), methylmethacrylate-acrylonitrile-butadiene styrene (MABS), acrylonitrile-ethylene-propylene-non-conjugated diene-styrene (AES).

The ungrafted rigid polymers (typically free of rubber) are resinous, thermoplastic polymers of styrene, α-methylstyrene, styrenes substituted in the nucleus such as para-methylstyrene, methyl acrylate, methylmethacrylate, acrylonitrile, methacrylonitrile, maleic acid anhydride, N-substituted maleimide, vinyl acetate or mixtures thereof. Styrene/acrylonitrile copolymers, α-methylstyrene/ acrylonitrile copolymers and methylmethacrylate/acrylonitrile copolymers are preferred.

The ungrafted rigid copolymers are known and may be prepared by radical polymerization, in particular by emulsion, suspension, solution or bulk polymerization. They preferably have number average molecular weights of from 20,000 to 200,000 g/mol and limiting viscosity numbers [η] of from 20 to 110 ml/g (determined in dimethylformamide at 25°C).

The number average molecular weight of the grafted rigid superstrate of the monovinylidene aromatic resin is designed to be in the range of 20,000 to 350,000 g/mol. The ratio of monovinylidene aromatic monomer to the second and optionally third monomer may is range from 90/10 to 50/50 preferably 80/20 to 60/40. The third monomer may optional replace 0 to 50 percent of one or both of the first and second monomers.

These rubber modified monovinylidene aromatic graft polymers may be polymerized either by mass, emulsion, suspension, solution or combined processes such as bulk-suspension, emulsion-bulk, bulk-solution or other techniques well known in the art. Furthermore, these rubber modified monovinylidene aromatic graft copolymers may be produced either by continuous, semibatch or batch processes.

In a preferred embodiment, the organophosphorus compound comprises one or more compounds according to the structural formula (VII): 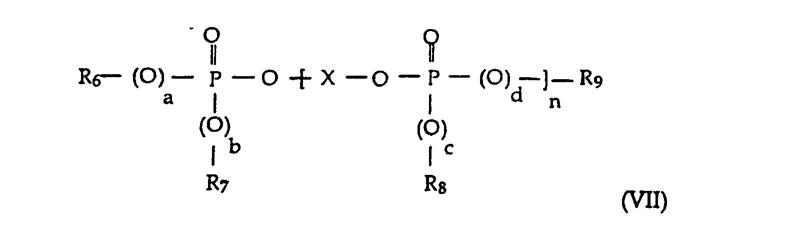
wherein R₆, R₇, R₈ and R₉ are each independently aryl, optionally substituted with halo or (C₁-C₆)alkyl,
X is arylene, optionally substituted with halo or (C₁-C₆)alkyl,
a, b, c and d are each independently 0 or 1, and
n is an integer from 0 to 5, more preferably from 1 to 5.

As used herein, the term "aryl" means a monovalent radical containing one or more aromatic rings per radical, which may optionally be substituted on the one or more aromatic rings with one or more alkyl groups, each preferably (C₁-C₆)alkyl and which, in the case wherein the radical contains two or more rings, may be fused rings.

As used herein, the term "arylene" means a divalent radical containing one or more aromatic rings per radical, which may optionally be substituted on the one or more aromatic rings with one or more alkyl groups, each preferably (C₁-C₆)alkyl and which, in the case wherein the divalent radical contains two or more rings, the rings may be may be fused or may be joined by a non-aromatic linkages, such as for example, an alkylene, alkylidene, any of which may be substituted at one or more sites on the aromatic ring with a halo group or (C₁-C₆)alkyl group.

In a preferred embodiment, the organophosphorus compound comprises a blend of organophosphorus compound oligomers according to formula VII, wherein n for each oligomer is an integer of from 1 to 5 and the blend has an average n value of greater than 1 to less than 5, more preferably greater than 1 to less than 3, even more preferably, greater than 1 to less than 2.

In highly preferred embodiment, the organophosphorus compound comprises one or more resorcinol diphosphate ("RDP") esters according to formula VII, wherein R₆, R₇, R₈ and R₉ are each phenyl, a, b, c and d are each 1, X is 1,3-phenylene and n is an integer from 1 to 5.

More preferably, the organophosphorus compound comprises a blend of RDP oligomers, wherein n for each oligomer is an integer of from 1 to 5 and the blend has an average n value of greater than 1 to less than 5, more preferably from greater than 1 to less than 3, even more preferably, from greater than 1 to less than 2.

In a more highly preferred embodiment, the organophosphorus compound comprises one or more bisphenol A diphosphate ("BPA-DP") esters according to formula VII, wherein R₆, R₇, R₈ and R₉ are each phenyl, a, b, c and d are each 1, and X is a divalent aromatic radical of the structural formula (VIII)): 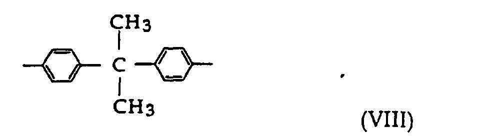 and n is an integer from 1 to 5.

More preferably, the organophosphorus compound comprises a blend of BPA-DP oligomers, wherein n for each oligomer is an integer of from 1 to 5 and the blend has an average n value of greater than 1 to less than 5, more preferably from greater than 1 to less than 3, and even more preferably, from greater than 1 to less than 2.

In another preferred embodiment, the organophosphorus compound component of the composition of the present invention comprises a mixture of from 1 to 99 wt% of one or more BPA-DP esters and 1 to 99 wt% of one or more RDP esters.

It has been found that acid species and/or acid precursors, which, under conditions of elevated heat and humidity, lead to the in-situ formation of acid species, are typically present as impurities in the above described organophosphorus compounds. Such impurities may result from such sources as, for example, catalyst residues, unreacted starting materials, such as, for example, phosphoryl halides or phosphoric acid derivatives, or from unstable phosphate esters of decomposition products. It has also been found that the use of a organophosphorus compound that has a high level of such acid species and/or such acid precursors as a flame retardant additive in a thermoplastic resin composition compromises the hydrolytic stability of the thermoplastic resin composition. These acid species may be titratable species and/or acid generating species that are not titratable but determinable by alternative analytical methods.

In a preferred embodiment, the organophosphorus compound is characterized by high purity, such that any acid or acid-generating impurities present in the compound do not exceed a level at which the combined amount of any acid initially present in the compound and any acid that may be generated in-situ under hydrolytic conditions from any acid-generating impurities present in the compound is equivalent to a titratable acid level of less than 1.0 milligrams ("mg"), more preferably from 0 to 0.5 mg and even more preferably from 0 to 0.15 mg, of potassium hydroxide per gram of the organophosphorus compound. The lower the level of acid and acid-generating impurities present in the organophosphate flame retardant component of the thermoplastic resin composition of the present invention, the better the hydrolytic stability of the thermoplastic resin composition.

In a preferred embodiment, the organophosphorus compound has an acid content that is neutralizable by a titration addition of from 0 to the equivalent of 1.0 mg, more preferably from 0 to 0.5 mg and even more preferably from 0 to 0.1 mg, of potassium hydroxide ("KOH") per gram of organophosphorus compound. The acid level of the organophosphorus compound is measured by dissolving a sample of the organophosphorus compound in isopropanol and then titrating the resultant solution with a 0.1 N aqueous solution of KOH to a bromophenol blue end point.

The organophosphorus compound has a hydrolyzable chloride content of from 0 to 100 parts per million ("ppm"), more preferably from 0 to 50 ppm and still more preferably from 0 to 20 ppm, based on the weight of the organophosphorus compound. The chloride content of the organophosphorus compound is measured by conventional gas or liquid chromatographic techniques.

In a more highly preferred embodiment the organophosphorus compound has an alkenylphenyl diphenyl phosphate content of from 0 to 2000 ppm, more preferably from 0 to 1000 ppm and still more preferably from 0 to 500 ppm, based on the weight of the organophosphorus compound. Alkenylphenyl diphenyl phosphates include, for example, isopropenylphenyl diphenyl phosphate and isobutenylphenyl diphenyl phosphate. The alkenylphenyl diphenyl phosphate content of the organophosphorus compound is measured by conventional chromatographic techniques, preferably by reverse phase high pressure liquid chromatography.

The organophosphorus compound has a magnesium content of from 0 to 1000 ppm, more preferably from 0 to 500 ppm and still more preferably from 0 to 250 ppm, based on the weight of the organophosphorus compound. The magnesium content of the organophosphorus compound is measured by conventional atomic absorption techniques.

In a preferred embodiment, the composition of the present invention includes a fluoropolymer, in an amount, typically from 0.01 to 0.5 pbw fluoropolymer per 100 pbw of the thermoplastic resin composition, effective to provide anti-drip properties to the resin composition. Suitable fluoropolymers and methods for making such fluoropolymers are known, see, for example, U.S Patent Nos. 3,671,487, 3,723,373 and 3,383,092. Suitable fluoropolymers include homopolymers and copolymers that comprise structural units derived from one or more fluorinated olefin monomers. The term "fluorinated olefin monomer" means an olefin monomer that includes at least one fluorine atom substituent. Suitable fluorinated olefin monomers include, for example, fluoroethylenes such as, for example, CF₂=CF₂, CHF=CF₂, CH₂=CF₂, CH₂=CHF, CClF=CF₂, CCl₂=CF₂, CCIF=CCIF, CHF=CCl₂, CH₂=CClF, and CCl₂=CClF and fluoropropylenes such as, for example, CF₃CF=CF₂, CF₃CF=CHF, CF₃CH=CF₂, CF₃CH=CH₂, CF₃CF=CHF, CHF₂CH=CHF and CF₃CH=CH₂. In a preferred embodiment, the fluorinated olefin monomer is one or more of tetrafluoroethylene (CF₂=CF₂), chlorotrichloroethylene (CCIF=CF₂), vinylidene fluoride (CH₂=CF₂) and hexafluoropropylene (CF₂=CFCF₃).

Suitable fluorinated olefin homopolymers include, for example, poly(tetra-fluoroethylene), poly(hexafluoroethylene).

Suitable fluorinated olefin copolymers include copolymers comprising structural units derived from two or more fluorinated olefin copolymers such as, for example, poly(tetrafluoroethylene-hexafluoroethylene), and copolymers comprising structural units derived from one or more fluorinated monomers and one or more non-fluorinated monoethylenically unsaturated monomers that are copolymerizable with the fluorinated monomers such as, for example, poly(tetrafluoroethylene-ethylene-propylene) copolymers. Suitable non-fluorinated monoethylenically unsaturated monomers include, for example, olefin monomers such as, for example, ethylene, propylene butene, acrylate monomers such as, for example, methyl methacrylate, butyl acrylate, vinyl ethers, such as, for example, cyclohexyl vinyl ether, ethyl vinyl ether, n-butyl vinyl ether, vinyl esters such as, for example, vinyl acetate, vinyl versatate.

In a preferred embodiment, the fluoropolymer particles range in size from 50 to 500 nm, as measured by electron microscopy.

In a highly preferred embodiment, the fluoropolymer is a poly(tetrafluoroethylene) homopolymer ("PTFE").

Since direct incorporation of a fluoropolymer into a thermoplastic resin composition tends to be difficult, it is preferred that the fluoropolymer be preblended in some manner with a second polymer such as for, example an aromatic polycarbonate resin or a styrene-acrylonitrile resin. Methods for making suitable pre-blends are known. For example, an aqueous dispersion of fluoropolymer and a polycarbonate resin may be steam precipitated to form a fluoropolymer concentrate for use as a drip inhibitor additive in thermoplastic resin composition, as disclosed in, for example, U.S. Patent No. 5,521,230 or, alternatively, an aqueous styrene-acrylonitrile resin emulsion or an aqueous acrylonitrile-butadiene-styrene resin emulsion and then precipitating and drying the co-coagulated fluoropolymer-thermoplastic resin composition to provide a PTFE-thermoplastic resin powder as disclosed in for example, U.S Patent No. 4,579,906.

In a preferred embodiment, the fluoropolymer additive comprises from 30 to 70 wt%, more preferably 40 to 60 wt%, of the fluoropolymer and from 30 to 70 wt%, more preferably 40 to 60 wt%, of the second polymer.

In a preferred embodiment, a fluoropolymer additive is made by emulsion polymerization of one or more monoethylenically unsaturated monomers in the presence of the aqueous fluoropolymer dispersion of the present invention to form a second polymer in the presence of the fluoropolymer. Suitable monoethylenically unsaturated monomers are disclosed above. The emulsion is then precipitated, for example, by addition of sulfuric acid. The precipitate is dewatered, for example, by centrifugation, and then dried to form a fluoropolymer additive that comprises fluoropolymer and an associated second polymer. The dry emulsion polymerized fluoropolymer additive is in the form of a free-flowing powder.

In a preferred embodiment, the monoethylenically unsaturated monomers that are emulsion polymerized to form the second polymer comprise one or more monomers selected from vinyl aromatic monomers, monoethylenically unsaturated nitrile monomer and (C₁-C₁₂)alkyl (meth)acrylate monomers. Suitable vinyl aromatic monomers, monoethylenically unsaturated nitrile monomer and (C₁-C₁₂)alkyl (meth)acrylate monomers are disclosed above.

In a highly preferred embodiment, the second polymer comprises structural units derived from styrene and acrylonitrile. More preferably, the second polymer comprises from 60 to 90 wt% structural units derived from styrene and from 10 to 40 wt% structural units derived from acrylonitrile.

The emulsion polymerization reaction mixture may optionally include emulsified or dispersed particles of a third polymer, such as, for example, an emulsified butadiene rubber latex.

The emulsion polymerization reaction is initiated using a conventional free radical initiator such as, for example, an organic peroxide compound, such as, for example, benzoyl peroxide, a persulfate compound, such as, for example, potassium persulfate, an azonitrile compound such as, for example, 2,2'-azobis-2,3,3-trimethylbutyronitrile, or a redox initiator system, such as, for example, a combination of cumene hydroperoxide, ferrous sulfate, tetrasodium pyrophosphate and a reducing sugar or sodium formaldehyde sulfoxylate.

A chain transfer agent such as, for example, a (C₉-C₁₃) alkyl mercaptan compound such as nonyl mercaptan, t-dodecyl mercaptan, may, optionally, be added to the reaction vessel during the polymerization reaction to reduce the molecular weight of the second polymer. In a preferred embodiment, no chain transfer agent is used.

In a preferred embodiment, the stabilized fluoropolymer dispersion is charged to a reaction vessel and heated with stirring. The initiator system and the one or more monoethylenically unsaturated monomers are then charged to the reaction vessel and heated to polymerize the monomers in the presence of the fluoropolymer particles of the dispersion to thereby form the second polymer.

Suitable fluoropolymer additives and emulsion polymerization methods are disclosed in EP 0 739 914 A1.

In a preferred embodiment, the second polymer exhibits a number average molecular weight of from 30,000 to 200,000 g/mol.

The thermoplastic resin composition of the present invention may optionally also contain various conventional additives, such as: antioxidants, such as, for example, organophosphites , for example, tris(nonylphenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, for example, butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl) propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, for example, distearylthiopropionate, dilaurylthiopropionate, ditridecylthiodipropionate, amides of beta-(3,5-di-tert-butyl-4-hydroxyphenol)-propionic acid; UV absorbers and light stabilizers such as, for example, 2-(2'-hydroxyphenyl) benzotriazoles, 2-Hydroxy-benzophenones; esters of substituted and unsubstituted benzoic acids, acrylates; fillers and reinforcing agents, such as, for example, silicates, TiO₂, glass fibers, carbon black, graphite, calcium carbonate, talc, mica; other additives such as, for example, lubricants such as, for example, pentaerythritol tetrastearate, EBS wax, silicone fluids, plasticizers, optical brighteners, pigments, dyes, colorants, flameproofing agents; anti-static agents; blowing agents, as well as other flame retarding agents in addition to the above described organophosphorus compounds.

### Examples 1-4

The compositions of Examples 1-4 of the present invention were prepared in by combining the following components in the relative amounts set forth, in pbw, below in TABLE I.
- PC: A linear polycarbonate resin derived from bisphenol A and phosgene and having an intrinsic viscosity of 0.48 dl/gm.
- ABS: Emulsion polymerized acrylonitrile-butadiene-styrene graft copolymer comprising 50 pbw of a discontinuous elastomeric phase (polybutadiene) and 50 pbw of a rigid thermoplastic phase (copolymer of 75 pbw styrene and 25 pbw acrylonitrile).
- SAN: Styrene-acrylonitrile copolymer (75 pbw styrene/25 pbw acrylonitrile).
- RDP: Mixture of resorcinol diphosphate oligomers with average degree of polymerization of 1.13 and having an acid level of less than 0.1 mg KOH per gram.
- TSAN:: Additive made by copolymerizing styrene and acrylonitrile in the presence of an aqueous dispersion of PTFE (50 pbw PTFE, 50 pbw of a styrene-acrylonitrile copolymer containing 75 wt% styrene and 25 wt% acrylonitrile).
- BPA-DP-1: Mixture of bisphenol A diphosphate oligomers with average degree of polymerization of 1.08.
- BPA-DP-2: Mixture of bisphenol A diphosphate oligomers with average degree of polymerization of 1.08.
- BPA-DP-3: Mixture of bisphenol A diphosphate oligomers with average degree of polymerization of 1.08.

The acid level, hydrolyzable chloride content, Magnesium content and diphenyl isopropenylphenyl phosphate content of BPA-DP-1, BPA-DP-2 and BPA-DP-3 were determined. Results are set forth below in TABLE I.

**TABLE I**

| | BPA-DP-1 | BPA-DP-2 | BPA-DP-3 |
|---|---|---|---|
| Acid level (mg KOH/g) | <0.01 | < 0.01 | < 0.02 |
| Hydrolyzable chloride content (ppm) | 1450 | 22 | 4 |
| Magnesium content (ppm) | 576 | 1296 | <60 |
| Isopropenylphenyl diphenyl | | | |
| phosphate content (wt%) | > 1% | >1% | <1% |

The following general procedure was followed in preparing and testing the compositions of Examples 1 -4. Well mixed dry blends of the components of the compositions were prepared by dispersing the components in a Henschel mixer. These dry blends were extruded on a laboratory twin screw extruders at a temperature of 250°C to 300°C and test specimens were then molded on a 30 ton Engel injection molder with a nominal melt temperature of about 240,6°C (465°F).

ASTM type I tensile bar of each of the compositions were molded and tested. Hydrolytic stability was measured by exposing part of a tensile bar to 100°C and 100% relative humidity for various periods of time ("t"). A part of the bar was then cut off and the polycarbonate weight average molecular weight ("Mw") was determined by gel permeation chromatography (GPC). All

| |
|---|
| molecular weights are reported relative to mono-disperse polystyrene standards of known molecular weight. The results of weight average molecular weight determination of specimens upon exposure to temperature and humidity for various times ("Mw (g/mol x 10⁻³), after aging at 100°C and 100% RH for residence time t (hr)") are set forth in TABLE II for each of Examples 1-4. |

**TABLE II**

| | 1 | 2 | 3 | 4 |
|---|---|---|---|---|
| PC | 70.05 | 67.75 | 67.75 | 67,75 |
| ABS | 9 | 9 | 9 | 9 |
| SAN | 8.3 | 8.3 | 8.3 | 8.3 |
| PTFE/PC | 0.4 | 0.4 | 0.4 | 0.4 |
| RDP | 11.5 | -- | -- | -- |
| BPA-DP-1 | -- | 13.8 | -- | -- |
| BPA-DP-2 | -- | -- | 13.8 | -- |
| BPA-DP-3 | -- | -- | -- | 13.8 |
| Stabilizers and | | | | |
| Lubricants | 0.75 | 0.75 | 0.75 | 0.75 |
| | | | | |
| Mw (g/mol x 10⁻³), | | | | |
| after aging at 100°C | | | | |
| and 100% RH for | | | | |
| residence time t (hr) | | | | |
| t = 0 | 52.7 | 44 | 52.9 | 53.3 |
| t = 3.75 | 52.1 | 42.4 | 48.8 | 52.1 |
| t = 6.5 | 48.8 | 41.2 | 47.5 | 51.5 |
| t = 12 | 46.8 | 41.6 | 45.1 | 49.3 |
| t = 15 | 43.5 | 40 | 41.6 | 50.2 |
| t=19 | 39.5 | 38.8 | 38.3 | 48.7 |
| t=24 | 32.2 | 36.4 | 34.1 | 47.9 |

The composition of Example 4 exhibited improved stability, as shown by the relatively small change in molecular weight under the aging conditions.

## Claims

1. A thermoplastic resin composition comprising
a. 75 to 98 parts by weight of a thermoplastic resin comprising at least one aromatic polycarbonate resin, and
b. 2 to 25 parts by weight of an organophosphorus flame retardant compound, each based on 100 parts by weight of the combined amount of thermoplastic resin and organophosphorus compound, wherein the organophosphorus compound (1) has an acid content that is neutralizable by titration addition of from zero to the equivalent of 1.0 mg of potassium hydroxide per gram of organophosphorus compound, (2) has a hydrolysable chloride content of zero to 100 parts per million based on the weight of the organophosphorus compound as measured by conventional gas or liquid chromatographic techniques and (3) has a magnesium content of from zero to 1000 parts per million based on the weight of the weight of the organophosphorus content.

2. Thermoplastic resin composition of claim 1 wherein the organophosphorus compound has an alkenylphenyl diphenyl phosphate content of zero to 2000 parts per million based on the weight of the organophosphorus compound.

3. The composition of claim 1, wherein the organophosphorus compound is according to the structural formula: 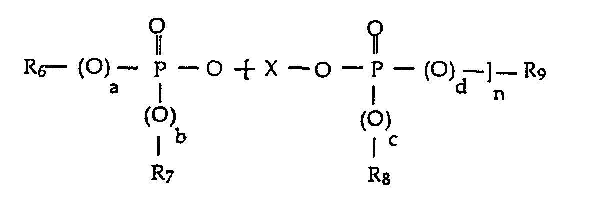
wherein R6, R7, R8 and R9 are each independently aryl, optionally substituted with halo or (C1-C6)alkyl,
X is arylene, optionally substituted with halo or (C1-C6)alkyl,
a, b, c and d are each independently 0 or 1, and
n is an integer from 0 to 5,

4. The composition of claim 3, wherein X is a divalent radical containing two or more aromatic rings joined by a non-aromatic linkage, any of which may be substituted at one or more sites on the aromatic ring with a halo group or (C1-C6)alkyl group and wherein the organophosphorus has an alkenyl phenyl diphenyl phosphate content of from 0 to 2000 parts by weight per million parts by weight of the organophosphorus compound.

5. The composition of claim 1, wherein component (a) of the composition further comprises a vinyl aromatic graft copolymer.

6. The composition of claim 1, further comprising a fluoropolymer, in an amount effective to provide anti-drip properties to the resin composition.

7. The composition of claim 3, wherein R₆, R₇, R₈ and R₉ are each phenyl, a, b, c and d are each 1, and X is a divalent aromatic radical of the structural formula: 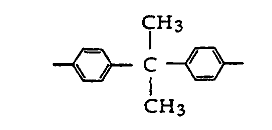 and n is an integer from 1 to 5.

8. A process for making a flame retardant themoplastic resin composition, comprising combining a thermoplastic resin, said resin comprising at least on aromatic polycarbonate resin, and a flame-retarding amount of an organophosphorus flame retardant compound as defined in claim 1.

## Patentansprüche

1. Eine thermoplastische Harzzusammensetzung umfassend
a. 75 bis 98 Gewichtsteile eines thermoplastischen Harzes aufweisend wenigstens ein aromatisches Polycarbonatharz, und
b. 2 bis 25 Gewichtsteile einer flammhemmenden Organophosphorverbindung, jeweils bezogen auf 100 Gewichtsteile der vereinigten Menge an thermoplastischem Harz und Organophosphorverbindung, wobei die Organophosphorverbindung (1) einen durch Titrationszugabe neutralisierbaren Säuregehalt von 0 bis zum Äquivalent von 1,0 mg Kaliumhydroxid pro Gramm der Organophosphorverbindung hat, (2) einen hydrolysierbaren Chloridgehalt von 0 bis 100 Teilen pro Million hat, bezogen auf das Gewicht der Organophosphorverbindung, gemessen durch herkömmliche Gas- oder Flüssigchromatographie-Techniken und (3) einen Magnesiumgehalt von 0 bis 1000 Teilen pro Million bezogen hat, auf das Gewicht des Gewichts des Organosphosphorgehalts.

2. Thermoplastische Harzzusammensetzung nach Anspruch 1, wobei die Organophosphorverbindung einen Alkenylphenyl-diphenyl-phosphatgehalt von 0 bis 2000 Teilen pro Million hat, bezogen auf das Gewicht der Organophosphorverbindung.

3. Zusammensetzung nach Anspruch 1, wobei die Organophosphorverbindung die folgende Strukturformel hat: 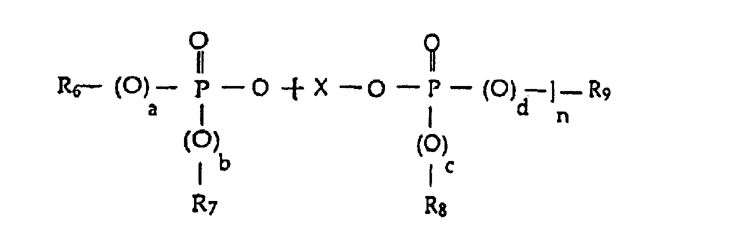
worin R6, R7, R8 und R9 jeweils unabhängig Aryl sind, gegebenenfalls substituiert mit Halogen oder (C1-C6)Alkyl,
X Arylen ist, gegebenenfalls substituiert mit Halogen oder (C1-C6)Alkyl,
a, b, c und d jeweils unabhängig 0 oder 1 sind, und
n eine ganze Zahl von 0 bis 5 ist.

4. Zusammensetzung nach Anspruch 3, wobei X ein zweiwertiger Rest ist, enthaltend zwei oder mehrere aromatische Ringe verbunden durch eine nicht-aromatische Verknüpfung, von denen jeder einzelne an einer oder mehreren Stellen am aromatischen Ring mit einer Halogengruppe oder (C1-C6)Alkylgruppe substituiert sein kann und wobei der Organophosphor einen Alkenylphenyl-diphenyl-phosphatgehalt von 0 bis 200 Gewichtsteilen pro Million Gewichtsteil der Organophosphorverbindung hat.

5. Zusammensetzung nach Anspruch 1, wobei Komponente (a) der Zusammensetzung weiterhin ein vinylaromatisches Pfropfcopolymer umfasst.

6. Zusammensetzung nach Anspruch 1, weiterhin aufweisend ein Fluorpolymer in einer zur Erzeugung von Anti-drip Eigenschaften der Harzzusammensetzung wirksamen Menge.

7. Zusammensetzung nach Anspruch 3, wobei R₆, R₇, R₈ und R₉ jeweils Phenyl sind, a, b, c und d jeweils 1 sind, und X ein zweiwertiger Rest der Strukturformel ist: 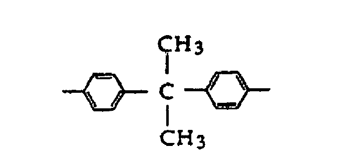 und n eine ganze Zahl von 1 bis 5 ist.

8. Verfahren zur Herstellung einer flammhemmenden thermoplastischen Harzzusammensetzung, bei welchem man ein thermoplastisches Harz, wobei das Harz wenigstens ein aromatisches Polycarbonatharz umfasst, und eine flammhemmende Menge einer flammhemmenden Organophosphor-Verbindung, wie in Anspruch 1 definiert, kombiniert.

## Revendications

1. Composition de résine thermoplastique comprenant:
a : de 75 à 98 parties en poids d'une résine thermoplastique comprenant au moins une résine polycarbonate aromatique, et
b : de 2 à 25 parties en poids d'un composé retardateur de flamme organophosphoreux, chacun étant basé sur 100 parties en poids du mélange total de résine thermoplastique et de composé organophosphoreux, dans laquelle le composé organophosphoreux (1) présente une teneur acide qui peut être neutralisée par ajout par titrage de zéro à l'équivalent de 1,0 mg d'hydroxyde de potassium par gramme de composé organophosphoreux, (2) présente une teneur en chlore pouvant être hydrolysé de zéro à 100 parties par million sur la base du poids du composé organophosphoreux, telle que mesuré par des procédés de chromatographie gazeuse ou liquide classiques et (3) présente une teneur en magnésium de zéro à 1000 parties par million sur la base du poids du contenu organophosphoreux.

2. Composition de résine thermoplastique selon la revendication 1, dans laquelle le composé organophosphoreux présente une teneur en phosphate d'alkénylphényle diphényle de zéro à 2000 parties par million sur la base du poids du composé organophosphoreux.

3. Composition selon la revendication 1, dans laquelle le composé organophosphoreux se présente selon la formule structurelle: 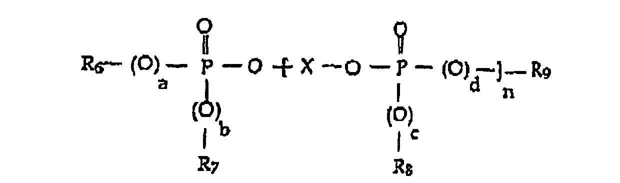
dans laquelle R₆, R₇, R₈ et R₉ sont chacun indépendamment un aryle, éventuellement substitué par un halo ou un alkyle en C₁ à C₆,
X est un arylène, éventuellement substitué par un halo ou un alkyle en C₁ à C₆,
a, b, c et d représentent chacun indépendamment 0 ou 1, et
n est un entier compris entre 0 et 5.

4. Composition selon la revendication 3, dans laquelle X est un radical divalent contenant deux ou plusieurs cycles aromatiques reliés par une liaison non aromatique, l'un quelconque de ceux-ci peut être substitué au niveau d'un ou de plusieurs sites sur le cycle aromatique par un groupe halo ou un groupe en alkyle en C₁ à C₆ et dans lequel l'élément organophosphoreux présente un contenu en phosphate d'alkényle phényle diphényle de 0 à 2000 parties en poids par million de parties en poids du composé organophosphoreux.

5. Composition selon la revendication 1, dans laquelle le composant (a) de la composition comprend, en outre, un copolymère vinyle aromatique implanté.

6. Composition selon la revendication 1, comprenant, en outre un fluoropolymère, en une quantité efficace afin d'assurer des propriétés anti-coulure à la composition de résine.

7. Composition selon la revendication 3, dans laquelle R₆, R₇, R₈ et R₉ sont chacun du phényle, a, b, c et d représentent chacun 1, et X est un radical aromatique divalent présentant la formule structurelle: 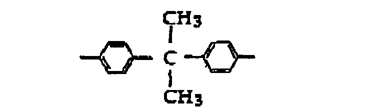 et n est un entier compris entre 0 et 5.

8. Procédé de fabrication d'une composition de résine thermoplastique à base de retardateur de flamme, comprenant l'association d'une résine thermoplastique, ladite résine comprenant au moins une résine de polycarbonate aromatique, et une certaine quantité de retardateur de flamme à base d'un composé retardateur de flamme organophosphoreux selon la revendication 1.
